# EUROPÄISCHE PATENTANMELDUNG

(11) **EP 4 436 037 A1**
(43) Veröffentlichungstag der Anmeldung: **25.09.2024**
(21) Anmeldenummer: 24163850.1
(22) Anmeldetag: 15.03.2024
(51) Int. Cl.: H02S 20/32, F24S 30/452

(54) **AUFSTÄNDERUNGSSYSTEM**

(30) Priorität: 16.03.2023 DE 102023106674
(71) Anmelder: Ingo, Lutz, 72116 Mössingen (DE); Junger, Martin, 72810 Gomaringen (DE)
(72) Erfinder: Lutz, Ingo, 72116 Mössingen (DE); Junger, Martin, 72810 Gomaringen (DE)
(74) Vertreter: Patentanwälte Ruff, Wilhelm, Beier, Dauster & Partner mbB

(57) **Zusammenfassung**

1. Aufständerungssystem.
2.1. Die Erfindung bezieht sich auf ein Aufständerungssystem für eine Funktionseinheit (4), wobei das Aufständerungssystem einen bodenstehenden Sockel (1) und eine am Sockel gehaltene Tragstruktur (2) mit einem Tragrahmen (3) für die Funktionseinheit (4) aufweist.
2.2. Gemäß der Erfindung weist der Sockel einen säulenförmigen, mit einem Füllgut befüllbaren Sockelkörper (5) auf, und die Tragstruktur weist eine Stützstruktur (6) auf, an welcher der Tragrahmen um eine horizontale Schwenkachse (S) schwenkbeweglich angelenkt ist und die um eine vertikale Drehachse (D) drehbeweglich am Sockelkörper gehalten ist
2.3. Verwendung z.B. als Aufständerungssystem für Photovoltaikmodule.

## Beschreibung

Die Erfindung bezieht sich auf ein Aufständerungssystem für eine Funktionseinheit, insbesondere ein Photovoltaikmodul, mit einem bodenstehenden Sockel und einer am Sockel gehaltenen Tragstruktur mit einem Tragrahmen für die Funktionseinheit.

Die von dem Aufständerungssystem getragene Funktionseinheit ist beispielsweise ein Photovoltaikmodul oder ein Solarthermiemodul. Das Aufständerungssystem ist in diesem Fall entsprechend als Photovoltaik- oder Solarthermieanlage konzipiert. Alternativ kann das Aufständerungssystem zum Aufständern anderer Objekte eingerichtet sein, z.B. eines Schildes, einer Werbetafel, eines Bildschirms, eines Bildes oder eines anderen Kunstobjektes. Die Funktionseinheit ist je nach Anforderung in entsprechender Weise an dem Aufständerungssystem gehalten, so dass eine gewünschte Sichtbarkeit bzw. Ausrichtung gegeben ist.

Derartige Aufständerungssysteme werden sowohl auf Freiflächen als auch auf Gebäudedächern, wie Haus- und Garagendächern, aufgestellt oder an Gebäudewänden angebracht. Die Aufständerungssysteme können starr oder drehbeweglich ausgestaltet sein. Ein drehbewegliches Aufständerungssystem ermöglicht beispielsweise als Sonnennachführsystem ein einachsiges oder ein zweiachsiges Nachführen des Photovoltaikmoduls abhängig vom Sonnenstand. In der Ausführung als zweiachsig nachgeführte Aufständerung ist üblicherweise eine Drehbeweglichkeit um eine vertikale und eine horizontale Achse gegeben. Das photovoltaische Aufständerungssystem wird in seiner bezüglich der vertikalen Drehachse neutralen Position typischerweise nach Süden hin ausgerichtet, so dass es sich in beide Richtungen, d.h. in Richtung nach Osten und nach Westen, gleich weit drehen kann, z.B. um jeweils 90°.

Der Tragrahmen des Aufständerungssystems ist zum Tragen der Funktionseinheit eingerichtet und bildet hierzu ein im Wesentlichen ebenes Gestell, das typischerweise aus miteinander verbunden Stäben oder Trägern besteht und mit dem die Funktionseinheit lösbar verbunden werden kann. Damit lassen sich die Montage und insbesondere die Demontage, z.B. falls die Funktionseinheit ausgetauscht werden soll, hinsichtlich des benötigten Aufwands und Werkzeugs sehr einfach gestalten.

Die Tragstruktur des Aufständerungssystems stellt die Verbindung zwischen dem bodenstehenden Sockel und der Funktionseinheit her und stellt gegebenenfalls eine gewünschte Dreh- und/oder Schwenkbeweglichkeit der Funktionseinheit gegenüber dem Sockel bereit. Herkömmliche Tragstrukturen besitzen oftmals die Form eines Gerüsts, das derart ausgelegt ist, dass es einerseits ein geringes Gewicht aufweist, um eine gegebenenfalls geforderte Dreh- oder Schwenkbeweglichkeit ohne großen energetischen Aufwand zu ermöglichen, und andererseits etwaige auftretende, auf die Funktionseinheit und/oder die Tragstruktur wirkende Kräfte an den Sockel übertragen kann.

Aus der Patentschrift EP 1 075 629 B1 ist ein Aufständerungssystem in Form eines Tragpfostens zum Tragen eines Sonnenkollektors bekannt. Der Sonnenkollektor ist um eine horizontale Schwenkachse in einem begrenzten Schwenkbereich schwenkbeweglich an dem Tragpfosten gehalten. In ähnlicher Weise ist aus der Patentschrift DE 42 08 255 C2 ein Aufständerungssystem bekannt, das einen im Boden verankerten Pfosten umfasst, an dem ein Sonnenkollektor gehalten ist. Der Sonnenkollektor ist um eine vertikale Drehachse drehbeweglich und um eine horizontale Schwenkachse schwenkbeweglich an dem Pfosten gehalten.

Von der Firma RIB RÖSER Ingenieurbeton wird auf dem Markt das Einbetonieren von Photovoltaikhalterungen in Betonfundamenten ab Werk angeboten. Die Betonfundamente mit den einbetonierten Halterungen werden dann zum gewünschten Standort transportiert und aufgestellt, um dann Photovoltaikmodule an den Halterungen zu befestigen.

Die Offenlegungsschrift DE 10 2012 021 697 A1 offenbart ein Aufständerungssystem mit einem Mast, der über eine kegelstumpfförmige Zisterne in einem Baugrund gegründet ist. Der Mast ist über Spannglieder stabilisiert, die mit einem Versteifungsring am oberen Rand der Zisterne verbunden sind. Ein weiteres herkömmliches Aufständerungssystem ist in der Patentschrift DE 101 92 244 B4 offenbart.

Der Erfindung liegt als technisches Problem die Bereitstellung eines Aufständerungssystems der eingangs genannten Art zugrunde, das sich in besonders einfacher Weise aufbauen und bei Bedarf auch wieder rückbauen lässt und im aufgebauten Zustand ein sicheres, standfestes Aufständern und einen optimalen Betrieb der Funktionseinheit gewährleistet.

Die Erfindung löst dieses Problem durch die Bereitstellung eines Aufständerungssystems mit den Merkmalen des Anspruchs 1. Vorteilhafte Weiterbildungen der Erfindung sind in den Unteransprüchen angegeben, deren Wortlaut hiermit durch Verweis zum Bestandteil der Beschreibung gemacht wird. Dies schließt insbesondere auch alle Ausführungsformen der Erfindung ein, die sich aus den Merkmalskombinationen ergeben, die durch die Rückbezüge in den Unteransprüchen definiert sind.

Beim erfindungsgemäßen Aufständerungssystem beinhalten der Sockel einen Sockelkörper und die Tragstruktur eine Stützstruktur. Der Sockelkörper kann als Sockelhohlkörper oder als massiver Sockelkörper ausgebildet sein. Der Tragrahmen ist an der Stützstruktur um eine horizontale Schwenkachse schwenkbeweglich angelenkt, und die Stützstruktur ist um eine vertikale Drehachse drehbeweglich am Sockelkörper gehalten. Die Drehbeweglichkeit und die Schwenkbeweglichkeit ermöglichen ein zweiachsiges Ausrichten des Tragrahmens und damit einer daran gehaltenen Funktionseinheit. Für den Fall, dass die Funktionseinheit ein Photovoltaikmodul oder ein Solarthermiemodul ist, im Folgenden unter dem Begriff Solarmodul zusammengefasst, ermöglicht dies eine zweiachsige Sonnennachführung und somit eine optimale Ausbeute der Sonneneinstrahlung. Des Weiteren ermöglicht die Dreh- und Schwenkbeweglichkeit ein geeignetes Ausrichten des Tragrahmens zu Zwecken wie der Reinigung der daran gehaltenen Funktionseinheit, der Montage oder Demontage der Funktionseinheit, dem Befreien von auf der Funktionseinheit angesammeltem Schnee oder um die Funktionseinheit aus dem Wind drehen und sie dadurch von hoher Windlast zu befreien. Zudem kann der Tragrahmen derart ausgerichtet werden, dass ein bequemer Zugang zum Sockel und zum bodennahen Bereich der Stützstruktur ohne Behinderung durch den Tragrahmen oder eine daran gehaltene Funktionseinheit möglich ist.

Die Stützstruktur stützt den Tragrahmen und damit eine daran getragene Funktionseinheit und überträgt demgemäß auf den Tragrahmen und/oder die Funktionseinheit wirkende Kräfte und Momente an weitere Komponenten des Aufständerungssystems, insbesondere den Sockel. Auftretende Kräfte und Momente können z.B. durch auf die Funktionseinheit wirkenden Wind oder eine auf der Funktionseinheit liegende Schneelast hervorgerufen werden. Vorzugsweise umfasst die Stützstruktur mehrere Träger, Streben und/oder geeignet geformte Stützkomponenten, welche miteinander unter Bildung eines Gerüsts verbunden werden.

Das Drehen der Stützstruktur gegenüber dem Sockel bewirkt eine Drehung der gesamten Tragstruktur um die vertikale Achse, also der Stützstruktur, des Tragrahmens und gegebenenfalls weiterer Komponenten sowie einer von dem Tragrahmen getragenen Funktionseinheit. Das Verschwenken des Tragrahmens gegenüber der Stützstruktur bewirkt gleichzeitig ein Verschwenken einer an dem Tragrahmen gehaltenen Funktionseinheit, während die Stützstruktur in Bezug auf das Verschwenken unbewegt bleibt.

In einer Weiterbildung der Erfindung ist die Stützstruktur gegenüber dem Sockelkörper frei drehbar oder über einen Drehwinkelbereich von mindestens 180° begrenzt drehbar gehalten. Dabei ist mit frei drehbar gemeint, dass die Stützstruktur gegenüber dem Sockelkörper in beide Drehrichtungen ungehindert, d.h. um 360° oder mehr, gedreht werden kann. Falls die Funktionseinheit ein Solarmodul ist, ermöglicht dies eine hinsichtlich der Ausrichtung um die vertikale Achse optimale Sonnennachführung zu jeder Tages- und Jahreszeit. Des Weiteren kann es die freie Drehbarkeit um die vertikale Achse in Fällen, in denen die Aufständerung auf einer landwirtschaftlich genutzten Bodenfläche steht, ermöglichen, dass die Funktionseinheit in eine Stellung gedreht werden kann, die eine gute Nutzung bzw. Zugänglichkeit der Bodenfläche für landwirtschaftliche Geräte oder Nutzfahrzeuge erlaubt. Auch ermöglicht die freie Drehbarkeit der Stützstruktur, dass aus jeder Richtung Sicht auf eine Front der Funktionseinheit gegeben sein kann, was beispielsweise erwünscht sein kann, wenn die Funktionseinheit ein Objekt ist, das zur Schau gestellt wird. Zudem muss nicht schon beim Aufbau bzw. der Montage der Aufständerung auf deren Ausrichtung geachtet werden, da die korrekte Ausrichtung nach dem Aufbau erfolgen kann, was den Aufbau erleichtert. Zumindest ein Teil dieser Vorteile lässt sich in entsprechenden Fällen auch schon dann erzielen, wenn nur eine begrenzte Drehbeweglichkeit gegeben ist, z.B. von 0° bis 180° oder mehr oder von 0° bis mindestens 90° oder mehr.

Weiter ermöglicht die freie oder ausreichend große Drehbarkeit einen Zugang zum Sockel bzw. zu dessen Fuß aus jeder Richtung, ohne dass dabei die Funktionseinheit den Zugang behindert. Dies kann z.B. beim Mähen oder sonstigem landwirtschaftlichem Bearbeiten der Bodenfläche, auf der die Aufständerung aufgestellt ist, hilfreich sein, da unmittelbar an den Sockel herangefahren werden kann. Falls mehrere Aufständerungen einander gegenüberstehen, z.B. in mehreren Reihen, können die Aufständerungen zweier benachbarter Reihen voneinander weggedreht werden, so dass zwischen ihnen eine Gasse gebildet wird, die im Wesentlichen bis an die Sockel der Aufständerungen heranreicht. In diesem Fall ermöglicht dies eine maximale Gassenbreite, was ein Durchfahren mit einem Fahrzeug, wie einem Traktor mit oder ohne Anhänger, erleichtern kann. In alternativen Ausführungen ist die Stützstruktur gegenüber dem Sockelkörper über weniger als 180° begrenzt drehbeweglich gehalten, wenn dies für entsprechende Anwendungen ausreichend ist.

In einer Weiterbildung der Erfindung ist die Stützstruktur durch eine sich ringförmig um die vertikale Drehachse erstreckende Drehlagerung am Sockelkörper gehalten. Eine solche Drehlagerung ist mit relativ geringem Bereitstellungsaufwand verbunden und problemlos in der Montage und in der Lage, die auf die Stützstruktur einwirkenden Kräfte auf den Sockelkörper abzuleiten. Dabei kann die Drehlagerung eine geschlossene Ringform oder alternativ eine offene Teilringform besitzen.

In einer Ausgestaltung der Erfindung ist der Sockelkörper säulenförmig, und die Drehlagerung umfasst eine obere, ringförmige Drehlagereinheit und/oder eine untere, ringförmige Drehlagereinheit. Die obere Drehlagereinheit befindet sich an einer oberen Stirnseite des Sockelkörpers, und die zweite Drehlagereinheit befindet sich an einer Säulenmantelaußenseite des Sockelkörpers. Bei Verwendung beider Drehlagereinheiten wird im Bedarfsfall ein Aufteilen auftretender Lasten auf die Drehlagereinheiten bzw. eine sicherheitserhöhende Redundanz für die Drehlagerfunktion ermöglicht. Zudem ermöglicht dies bei Bedarf eine Auslegung der beiden Drehlagereinheiten auf unterschiedliche Anforderungen. So kann z.B. die erste Drehlagereinheit vorzugsweise zur Aufnahme von Axialkräften ausgelegt sein, während die zweite Drehlagereinheit durch ihre Abstützung an der Sockelmantelfläche gut Seitenkräfte und durch diese bedingte Drehmomente um eine horizontale Achse aufnehmen kann. Alternativ dazu weist die Drehlagereinheit lediglich eine der beiden Drehlagereinheiten auf, die alle auftretenden Kräfte und Momente aufnimmt, oder sie weist mehr als zwei Drehlagereinheiten auf, wenn dies für bestimmte Anwendungen zweckmäßig ist.

In einer Ausgestaltung der Erfindung sind die obere und die untere Drehlagereinheit koaxial zueinander und voneinander axial beabstandet angeordnet. Dadurch kann sich die Stützstruktur an axial voneinander beabstandeten Stellen am Sockel abstützen. Entsprechend lassen sich dadurch Kraftbelastungen auf den Sockel an mehreren axial voneinander beabstandeten Stellen ableiten. Alternativ ist beispielsweise die untere Drehlagereinheit ohne axialen Abstand zur oberen Drehlagereinheit in einem Bereich der Sockelmantelfläche angeordnet, der an die obere Stirnseite des Sockelkörpers grenzt.

In einer Ausgestaltung der Erfindung weist das Aufständerungssystem einen Drehantrieb zum Drehen der Stützstruktur um die vertikale Drehachse auf. Dieser ist an die obere und/oder die untere Drehlagereinheit gekoppelt. Der Drehantrieb ermöglicht ein angetriebenes und bei Bedarf automatisches, d.h. selbsttätiges, Drehen bzw. Ausrichten der Stützstruktur in Bezug auf den Sockel. Alternativ ist der Drehantrieb nicht an eine der Drehlagereinheiten gekoppelt, sondern unmittelbar an eine Komponente der Stützstruktur, oder das Aufständerungssystem weist überhaupt keinen Drehantrieb auf und die Stützstruktur wird manuell zwischen verschiedenen Ausrichtungen gedreht.

In einer Ausgestaltung der Erfindung umfasst die untere Drehlagereinheit mehrere Drehlagerrollen und einen sich gegen die Drehlagerrollen abstützenden Drehlagerring. In einer spezielleren Realisierung sind die Drehlagerrollen an der Säulenmantelaußenseite angebracht, und der Drehlagerring ist an einem unteren Bereich der Stützstruktur angebracht oder von dem unteren Bereich der Stützstruktur gebildet. In einer anderen diesbezüglichen Realisierung sind die Drehlagerrollen am unteren Bereich der Stützstruktur angebracht, und der Drehlagerring ist an der Säulenmantelaußenseite angebracht oder von der Säulenmantelaußenseite gebildet. Die mehreren, insbesondere zwischen vier und sechzehn, z.B. acht, Drehlagerrollen sind vorzugsweise in äquidistanten Abständen in Umfangsrichtung um die Säulenmantelfläche herum angeordnet, so dass sich die Stützstruktur an dem Sockel in allen Richtungen gut abstützen kann.

In weitergehenden Ausgestaltungen der Erfindung umfassen die Drehlagerrollen axial nach oben abstehende, erste Drehlagerrollen an der Säulenmantelaußenseite oder im unteren Bereich der Stützstruktur und/oder axial nach unten abstehende, zweite Drehlagerrollen an der Säulenmantelaußenseite oder im unteren Bereich der Stützstruktur und/oder radial nach außen abstehende, dritte Drehlagerrollen an der Säulenmantelaußenseite oder im unteren Bereich der Stützstruktur und/oder radial nach innen abstehende vierte Drehlagerrollen an der Säulenmantelaußenseite oder im unteren Bereich der Stützstruktur.

Diese verschiedenen Anordnungen der Drehlagerrollenhaben haben je für sich spezifische Vorteile. Axial nach oben oder unten abstehende Drehlagerrollen, deren Drehlagerrollachsen dann zweckmäßigerweise senkrecht zur Drehachse der Stützstruktur bzw. zur Vertikalen orientiert sind, eignen sich im Zusammenwirken mit dem Drehlagerring, der als Lauffläche bzw. Kontaktfläche für die Drehlagerrollen fungiert, insbesondere dazu, Kräfte in vertikaler Richtung aufnehmen, wie die Gewichtskraft der Tragstruktur samt montierter Funktionseinheit. Radial nach innen oder außen abstehende Drehlagerrollen, deren Drehlagerrollachsen dann zweckmäßigerweise parallel zur Drehachse der Stützstruktur bzw. zur Vertikalen orientiert sind, eignen sich im Zusammenwirken mit dem Drehlagerring insbesondere dazu, Kräfte in horizontaler Richtung aufnehmen, wie Seitenkräfte durch Windeinwirkung.

In einer Weiterbildung der Erfindung umfasst die Stützstruktur einen Stützrahmen und ein Stützgerüst. Der Tragrahmen ist um die horizontale Schwenkachse schwenkbeweglich an dem Stützrahmen angelenkt. Das Stützgerüst ist an einer Oberseite mit dem Stützrahmen verbunden und stützt sich mit einer Unterseite an der Säulenmantelaußenseite des Sockelkörpers ab. Der Stützrahmen und das Stützgerüst können fest miteinander verbunden und/oder aus verschiedenen Materialien gefertigt sein. Ebenso wie der Tragrahmen kann der Stützrahmen als ein im Wesentlichen ebenes Gestell ausgestaltet sein, das aus mehreren fest miteinander verbunden Stäben bzw. Trägern besteht. Bevorzugt ist der Stützrahmen über die erste Drehlagereinheit und das Stützgerüst über die zweite Drehlagereinheit mit dem Sockelkörper drehbeweglich verbunden.

In einer Ausgestaltung der Erfindung weist das Stützgerüst mehrere Stützstreben auf, die an der Stützgerüst-Oberseite mit einem Eckprofil und an der Stützgerüst-Unterseite mit einem Kreisbogenprofil enden. Dadurch kann das Stützgerüst an seiner Stützgerüst-Unterseite einen Ring bilden, der optimal an die Form der zweiten Drehlagereinheit und des Sockelkörpers angepasst ist, sofern dieser als Rotationskörper ausgeformt ist, ohne dass hierfür ein zusätzliches Ringbauteil erforderlich ist. Dies ermöglicht ein gleichmäßiges Abstützen an dem Sockelkörper und eine ästhetische Erscheinungsform mit einem quasi fließenden Übergang zwischen einer ggf. eher eckigen Form des Stützrahmens und einer eher runden Form des Sockelkörpers durch die Stützstreben. Zudem ermöglicht das Eckprofil ein günstiges Befestigen am Stützrahmen.

In einer Ausgestaltung der Erfindung weist der Stützrahmen eine ebene Rahmenstruktur auf, und der Tragrahmen ist durch eine Schwenklagerung an einer Randseite der Rahmenstruktur des Stützrahmens angelenkt. Dadurch stehen der Stützrahmen und der Tragrahmen nur wenig in vertikaler Richtung über den Sockel ab, so dass die durch an dem Tragrahmen bzw. der daran gehaltenen Funktionseinheit angreifende Kräfte in Bezug auf den Sockel hervorgerufenen Momente vergleichsweise klein sind. Durch das randseitige Anlenken des Tragrahmens an dem Stützrahmen behindert der Stützrahmen ein Verschwenken des Tragrahmens trotz seiner flächigen Ausdehnung nicht. Vorzugsweise weist der Stützrahmen eine rechteckige Form auf und besteht aus mehreren, rechtwinklig miteinander verbundenen Streben bzw. Trägern. Der Tragrahmen ist bevorzugt über mehrere Scharniere mit dem Stützrahmen schwenkbeweglich verbunden, wobei wenigstens zwei Scharniere voneinander beabstandet z.B. an gegenüberliegenden Enden der Randseite der Rahmenstruktur des Stützrahmens angeordnet sind.

In einer Weiterbildung der Erfindung weist das Aufständerungssystem einen Schwenkantrieb zum Verschwenken des Tragrahmens um die horizontale Schwenkachse auf. Der Schwenkantrieb ist ein Linearantrieb mit einer Stangenführung als einem ersten Antriebselement und einer gegenüber der Stangenführung linearbewegten Antriebsstange als einem zweiten Antriebselement. Dabei ist das eine Antriebselement an der Stützstruktur und das andere Antriebselement am Tragrahmen gehalten. Der Schwenkantrieb ermöglicht ein angetriebenes und bei Bedarf automatisches Verschwenken des Tragrahmens um die horizontale Drehachse. Vorzugsweise weist das Aufständerungssystem mehrere Schwenkantriebe auf, so dass sich die Last auf die Schwenkantriebe verteilt. Die Nullstellung der Schwenkbewegung, d.h. die Lage bei einem Schwenkwinkel von 0°, kann z.B. durch den vollständig eingeschwenkten Zustand des Tragrahmens definiert sein, bei dem eine durch den Tragrahmen bzw. der daran gehaltenen Funktionseinheit definierte Fläche bzw. Ebene horizontal verläuft. Die Verschwenkbarkeit aus dieser Nullstellung kann je nach Bedarf auf einen maximalen Schwenkwinkel begrenzt sein, z.B. einen maximalen Schwenkwinkel zwischen 50° und 60°, insbesondere ca. 55°.

In einer Weiterbildung der Erfindung verjüngt sich der Sockelkörper in vertikaler Richtung nach oben hin. Insbesondere verjüngt sich der Sockelkörper dabei kontinuierlich oder in zwei oder mehr Stufen. Dadurch weist der Sockel trotz seiner erforderlichen Größe ein schlankes, ansprechendes Design auf. Außerdem bietet der sich in vertikaler Richtung nach unten hin erweiternde Sockelkörper eine relativ breite Auflagefläche, was die Standsicherheit des Aufständerungssystems erhöht. Durch die vergleichsweise schmale Oberseite behindert der Sockelkörper die Drehbewegung der Stützstruktur und die Schwenkbewegung des Tragrahmens inklusive daran gehaltener Funktionseinheit nicht signifikant und ermöglicht so einerseits einen großen Schwenkbereich und andererseits bei verschwenktem Tragrahmen ein unbehindertes Drehen der Stützstruktur.

In einer Weiterbildung der Erfindung ist der Sockelkörper aus einem Beton- oder Steinmaterial gebildet. Dadurch ist der Sockel gegenüber Umwelteinflüssen sehr robust und kann das Gewicht der darauf lastenden Tragstruktur inklusive an dem Tragrahmen gehaltener Funktionseinheit sicher tragen. Zudem ist die Fertigung aus Beton hinsichtlich Form und Größe des Sockelkörpers sehr flexibel und kostengünstig.

In einer Weiterbildung der Erfindung ist der Sockelkörper als ein Sockelhohlkörper gebildet und mit einem Füllgut befüllbar. Das gemeinsame Gewicht des Sockelhohlkörpers und des Füllguts kann für eine ausreichende Standsicherheit des Aufständerungssystems samt der damit aufgeständerten Funktionseinheit gegenüber umgebungsbedingt einwirkenden Kräften, wie sie z.B. durch Windeinflüsse oder Schneelasten verursacht werden können, sorgen, ohne dass dazu zwingend eine Verankerung des Aufständerungssystems bzw. des Sockels im Boden benötigt wird, die ihrerseits voraussetzt, dass der Boden von zugehörigen Verankerungselementen durchdrungen werden kann bzw. darf. Der noch unbefüllte Sockelhohlkörper selbst besitzt gegenüber einem massiven Sockelkörper bzw. dem befüllten Sockelhohlkörper ein deutlich geringeres Gewicht und kann daher vergleichsweise einfach zu einem vorgesehenen Standort transportiert und aufgestellt werden kann. Nach dem Aufstellen des Sockelhohlkörpers kann dieser dann mit dem Füllgut befüllt werden, wobei das Füllgut separat vom Sockelhohlkörper zum Aufstellort transportiert werden kann. Das Aufständerungssystem lässt sich folglich mit relativ geringem Aufwand zum Standort transportieren und dort installieren. Zudem erleichtert dies auch einen Ab- oder Rückbau des Aufständerungssystems in der gleichen Weise, indem das Füllgut aus dem Sockelhohlkörper entfernt und das Füllgut und der Sockelhohlkörper im unbefüllten Zustand separat abtransportiert werden können.

Der säulenförmige Sockelhohlkörper kann eine beliebige geeignete Querschnittsform aufweisen, z.B. eine rotationssymmetrische oder prismatische Form. Zum Befüllen mit dem Füllgut weist der Sockelhohlkörper zweckmäßigerweise eine Öffnung auf, durch die hindurch ein Hohlraum des Sockelhohlkörpers von außen zugänglich ist. Die Öffnung kann sich auf z.B. an einer Oberseite oder einer Mantelseite des Sockelhohlkörpers befinden. Beispielsweise kann die gesamte Oberseite des Sockelhohlkörpers offen ausgestaltet sein und insgesamt die Öffnung bilden. Des Weiteren kann die Öffnung durch eine separate Abdeckung oder im vollständig aufgebauten Zustand des Aufständerungssystems durch weitere Komponenten desselben verdeckt sein oder alternativ offen bleiben. Auf einer Unterseite kann der Sockelhohlkörper optional einen Sockelboden aufweisen, so dass in den Sockelhohlkörper gefülltes Füllgut nicht in Kontakt mit dem Erdboden gelangt oder nicht in den Erdboden absackt.

Optional kann eine zusätzliche Verankerung des Aufständerungssystems im Boden vorgesehen sein, um die Standsicherheit bei Bedarf weiter zu erhöhen. Zur Verankerung können z.B. in den Boden getriebene Pfähle oder im Boden versenkte Fundamente dienen. Dies ist natürlich nicht in Fällen anwendbar, in denen der Boden zu hart bzw. nicht durchdringbar ist oder eine Verletzung der Bodenoberfläche nicht in Betracht kommt.

Als Füllgut kann beliebiges herkömmliches Füllgut verwendet werden, insbesondere auch vor Ort vorhandenes, geeignetes Füllmaterial. Ebenfalls möglich ist, dass Zubehör, das in Zusammenhang mit dem Betrieb der Funktionseinheit verwendet wird, wie z.B. Steuerungsgeräte oder Stromrichter, in dem Sockelhohlkörper untergebracht ist und als Füllgut fungiert. Insbesondere können verschiedene Materialien bzw. Komponenten gemeinsam in dem Sockelhohlkörper untergebracht sein und als Füllgut dienen. Nach dem Befüllen des Sockelhohlkörpers mit dem Füllgut ist dieses durch den Sockelhohlkörper vor Umwelteinflüssen weitestgehend geschützt. Das Füllgut kann den Sockelhohlkörper vollständig oder nur zu einem Teil ausfüllen. Die Menge an Füllgut, mit dem der Sockelhohlkörper befüllt wird, kann abhängig von dem als Füllgut verwendeten Material und dem für die Standsicherheit erforderlichen Gewicht gewählt werden. Das Gleiche gilt für die Form und die Dimensionierung bzw. Bemessung des Sockelhohlkörpers. Dabei besteht der Sockelhohlkörper vorzugsweise aus Beton, alternativ aus Stein, einem Kunststoff oder einem anderen geeigneten Material.

In einer Weiterbildung der Erfindung ist der Sockelhohlkörper mit einem Schüttgutmaterial und/oder einer Füllflüssigkeit und/oder einer Energiespeichereinheit als Füllgut befüllt, je nach Bedarf teilbefüllt oder vollständig befüllt. Geröll, Schutt, Kies und Sand stellen geeignete Schüttgutmaterialien dar, da sie günstig und typischerweise leicht verfügbar sind und sich einfach in den Sockelhohlkörper einfüllen lassen. Ebenso denkbar ist die Verwendung von Materialien wie Beton, Klinker oder Keramik. Die Füllflüssigkeit kann direkt in den Sockelhohlkörper oder in einen separaten Behälter gefüllt werden, welcher wiederum in dem Sockelhohlkörper platziert wird. Als Füllflüssigkeiten kommen beispielsweise für den Betrieb des Aufständerungssystems, d.h. das Drehen der Stützstruktur oder das Verschwenken des Tragrahmens, erforderliche Betriebsmittel wie Kühlflüssigkeit oder Hydraulikflüssigkeit in Betracht. Ein Energiespeicher kann beispielsweise eine wiederaufladbare Batterie bzw. Akkumulator oder ein Schwungrad sein, der von der Funktionseinheit erzeugte oder zum Betrieb der Funktionseinheit erforderliche Energie speichert. Zusätzlich zum Füllgut können elektrische und/oder elektronische Einrichtungen in dem Sockelhohlkörper untergebracht sein, welche für den Betrieb des Aufständerungssystems und/oder der Funktionseinheit benötigt werden, z.B. Wechselrichtereinheiten für Solarmodule.

In einer Weiterbildung der Erfindung umfasst der Sockelkörper mehrere säulenförmige, in vertikaler Richtung aufeinander angeordnete Sockelteile, und ein oberster Sockelteil ist durch zugkraftaufnehmende Verbinder mit einem untersten Sockelteil verbunden. Die mehreren Sockelteile können einzeln transportiert und vor Ort aneinander montiert werden, was den Transport und Aufbau nochmals vereinfacht. Zudem können die Sockelteile im Fall des Sockelhohlkörpers bei Bedarf schrittweise mit dem Füllgut befüllt werden.

Gegebenenfalls vorhandene, zwischen dem untersten und dem obersten Sockelteil angeordnete weitere Sockelteile können sowohl in ihrer oberen als auch in ihrer unteren Stirnseite Öffnungen aufweisen, so dass alle Sockelteile einen gemeinsamen Hohlraum bilden. Insbesondere können jeweils die gesamte obere und untere Stirnseite jedes weiteren Sockelteils eine Öffnung ausbilden. Das unterste Sockelteil kann optional eine verschließbare oder abdeckbare Öffnung aufweisen, durch die hindurch beim Rückbau des Aufständerungssystems das Füllgut aus dem Sockelhohlkörper entnommen werden kann.

Die Verbinder verlaufen vorzugsweise entlang der Innenseite des Sockelhohlkörpers und sind dort in oder an den Sockelteilen verankert. Alternativ verlaufen die Verbinder entlang der Außenseite des Sockelhohlkörpers. Die Verbinder sind zweckmäßigerweise in Umfangsrichtung des Sockels voneinander beabstandet angeordnet, vorzugsweise in äquidistanten Abständen, und nehmen auf diese Weise auftretende Zugkräfte aus allen Richtungen gleichmäßig auf. Die Verbinder können je nach Bedarf nur zugsteif ausgeführt sein, z.B. als Seile oder Kabel, wie Stahlkabel, oder zusätzlich auch drucksteif, z.B. als starre, langgestreckte Verbindungsstreben.

In einer alternativen Weiterbildung der Erfindung umfasst der Sockelkörper mehrere säulenförmige, konzentrisch angeordnete Sockelteile, wobei ein inneres Sockelteil in vertikaler Richtung nach oben über ein äußeres Sockelteil vorsteht. Wie bereits vorhergehend beschrieben, können die mehreren Sockelteile einzeln transportiert und vor Ort aufgestellt werden, was Transport und Aufbau vereinfacht. Des Weiteren kann sich der Sockelkörper dadurch in vertikaler Richtung nach oben hin stufenweise verjüngen und weist somit eine breitere, bodenstehende Unterseite, die einen stabilen Stand des Aufständerungssystems gewährleistet, und eine demgegenüber schmalere Oberseite auf, die ein Verschwenken des Tragrahmens und ein Drehen der Stützstruktur nicht behindert.

Die Sockelteile weisen beispielsweise polygonale, insbesondere rechteckige bzw. quadratische, und/oder elliptische, insbesondere kreisförmige, Querschnittsflächen auf, deren Flächenschwerpunkte auf einer vertikalen Achse liegen, wobei die Querschnittsflächen der Sockelteile einander nicht ähnlich sein müssen. Außerdem können alle, nur eines oder manche der Sockelteile Öffnungen aufweisen, durch die hindurch der Sockelhohlkörper befüllt werden kann. Vorzugsweise stützt sich die Stützstruktur an der Säulenmantelaußenseite des inneren, über das äußere nach oben abstehenden Sockelteils ab.

In einer weiteren alternativen Weiterbildung der Erfindung weist der Sockelkörper ein Säulenteil und ein Fußteil auf, das an der Unterseite des Säulenteils radial nach außen von diesem absteht und auf dem mindestens ein Ballastelement angeordnet ist. Vorzugsweise sind auf dem Fußteil mehrere Ballastelemente angeordnet. Wie bereits vorhergehend im Zusammenhang mit den Sockelteilen beschrieben, können in entsprechender Weise der Sockelkörper und das oder die Ballastelemente separat voneinander transportiert und aufgestellt werden, was Transport und Aufbau sowie gegebenenfalls den Rückbau des Aufständerungssystems vereinfacht. Das Säulenteil weist einen Hohlkörper auf, der über eine Öffnung in dessen Stirnseite oder Säulenmantelaußenseite mit dem Füllgut befüllt werden kann. Das Ballastelement kann zum Gesamtgewicht des Sockels und damit zu einer größeren Stabilität des Aufständerungssystems beitragen.

Vorzugsweise steht das Fußteil ringförmig von dem Säulenteil ab und das Ballastelement umgibt das Säulenteil ringförmig, so dass die Standsicherheit des Aufständerungssystems bei auf die Tragstruktur bzw. die Funktionseinheit wirkenden Kräften und Momenten um eine horizontale Achse in allen Richtungen gegeben ist. Zu diesem Zweck kann das Ballastelement als ringförmiges Ballastelement geformt sein oder aus mehreren Einzelteilen zusammengesetzt sein, die sich nach dem Anordnen auf dem Fußteil gemeinsam ringförmig um den Säulenteil herum erstrecken. Alternativ steht das Fußteil teilringförmig von dem Säulenteil ab und/oder das Ballastelement umgibt das Säulenteil nur teilweise bzw. abschnittsweise. Das Ballastelement kann aus dem gleichen Material wie der Sockelkörper oder aus einem anderen geeigneten Material bestehen.

In einer Weiterbildung der Erfindung ist das Aufständerungssystem zum Aufständern einer Funktionseinheit eingerichtet, die einen Rahmen und eine Mehrzahl von an diesem angeordneten, plattenförmigen Funktionsmodulen umfasst, von denen zumindest einige an dem Rahmen zwischen einer Nutzstellung und einer gegenüber der Nutzstellung gekippten Winddruckentlastungsstellung schwenkbeweglich gehalten sind. Das Aufständerungssystem weist einen Koppelmechanismus zum gekoppelten Verschwenken der schwenkbeweglich am Rahmen der Funktionseinheit gehaltenen Funktionsmodule auf. Dies ermöglicht es, bei starkem Wind die Funktionseinheit und damit auch das Aufständerungssystem von hohen Winddruckkräften zu entlasten, indem die betreffenden Funktionsmodule in dieser Situation durch den Koppelmechanismus, der je nach Bedarf und Anwendungsfall motorisch oder händisch bedient werden kann, von ihrer Nutzstellung, in der sie der Erfüllung der Nutzfunktion dienen, die der Funktionseinheit zugedacht ist, in ihre Winddruckentlastungsstellung verschwenkt werden, in der sie dem einwirkenden Wind weniger Widerstandsfläche bieten. Mit anderen Worten können diese Funktionseinheit damit aus dem Wind genommen werden. Wenn die Winddruckbelastung nachgelassen hat, können die Funktionsmodule wieder in ihre Nutzstellung zurückgeschwenkt werden.

Vorteilhafte Ausführungsformen der Erfindung sind in den Zeichnungen dargestellt. Diese und weitere Ausführungsformen der Erfindung werden nachfolgend näher erläutert. Hierbei zeigen:
- Fig. 1: eine Perspektivansicht eines Aufständerungssystems mit Sockel, drehbeweglicher Tragstruktur, Stützstruktur und Drehlagerung sowie einer am Aufständerungssystem schwenkbeweglich gehaltenen Funktionseinheit in maximal verschwenktem Zustand,
- Fig. 2: eine Seitenansicht des Aufständerungssystems in vollständig eingeschwenktem Zustand,
- Fig. 3: eine Explosionsansicht des Aufständerungssystems mit Funktionseinheit,
- Fig. 4: eine Perspektivansicht eines Tragrahmens der Tragstruktur,
- Fig. 5: eine Perspektivansicht eines Stützrahmens der Tragstruktur,
- Fig. 6: eine perspektivische Detailansicht eines unteren Bereichs des Sockels und eines Stützgerüsts der Tragstruktur mit einer Drehlagereinheit,
- Fig. 7: eine Perspektivansicht des Stützgerüsts mit aneinander montierten Stützstreben,
- Fig. 8: eine perspektivische Explosionsansicht der einzelnen Stützstreben,
- Fig. 9: eine perspektivische Detailansicht eines Schwenklagerbereichs von Stützrahmen und Tragrahmen,
- Fig. 10: eine Längsschnittansicht eines zweiteiligen Sockelhohlkörpers des Sockels mit Verbindern,
- Fig. 11: eine Perspektivansicht eines weiteren Aufständerungssystems mit modifiziertem Sockel und modifizierter Stützstruktur in vollständig eingeschwenktem Zustand,
- Fig. 12: eine geschnittene Explosionsansicht des Sockelhohlkörpers des Sockels von Fig. 11,
- Fig. 13: eine Längsschnittansicht eines weiteren Aufständerungssystems mit nochmals modifiziertem Sockel und der Stützstruktur von Fig. 11 in vollständig eingeschwenktem Zustand,
- Fig. 14: eine perspektivische Explosionsansicht des Sockels von Fig. 13,
- Fig. 15: eine Perspektivansicht mehrerer auf einer Freifläche in beabstandeten Reihen angeordneter Aufständerungssysteme nach Art der Fig. 1 bis 10 in vollständig eingeschwenktem Zustand,
- Fig. 16: die Ansicht von Fig. 15 mit den Aufständerungssystemen in maximal verschwenktem Zustand,
- Fig. 17: eine Seitenansicht von zwei benachbarten Aufständerungssystemen in voneinander weggedrehten Stellungen,
- Fig. 18: die Ansicht von Fig. 16 mit zwei benachbarten Reihen voneinander weggedrehter Aufständerungssysteme nach Art von Fig. 17 zwecks Gassenbildung,
- Fig. 19: die Ansicht von Fig. 2 für ein Aufständerungssystem mit modifizierter Drehlagerung,
- Fig. 20: eine Längsschnittansicht des Aufständerungssystems von Fig. 19 im Bereich der Drehlagerung,
- Fig. 21: die Ansicht von Fig. 1 für das Aufständerungssystem von Fig. 19 mit einer Funktionseinheit mit in eine Winddruckentlastungsstellung verschwenkten Funktionsmodulen,
- Fig. 22: eine Perspektivansicht eines Schwenkmechanismus des Aufständerungssystems von Fig. 19 zum Verschwenken der Funktionsmodule und
- Fig. 23: eine Draufsicht auf das Aufständerungssystem von Fig. 19 mit der Funktionseinheit mit den in die Winddruckentlastungsstellung verschwenkten Funktionsmodulen.

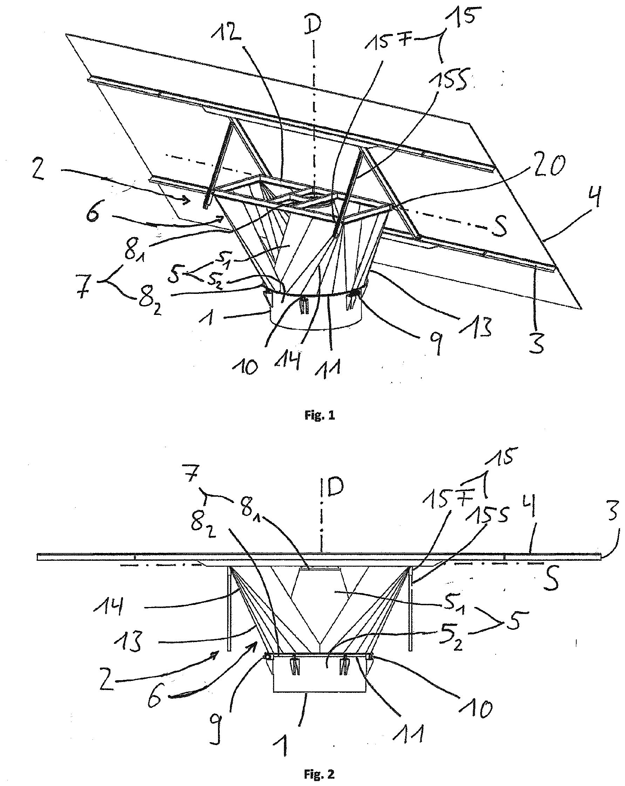

In den Fig. 1 bis 14 und 19 bis 23 ist das erfindungsgemäße Aufständerungssystem exemplarisch in mehreren Ausführungsformen veranschaulicht, wobei als Funktionseinheit 4 beispielhaft ein Photovoltaikmodul vorgesehen ist. Das Aufständerungssystem umfasst einen bodenstehenden Sockel 1 und eine am Sockel 1 gehaltene Tragstruktur 2 mit einem Tragrahmen 3 für die Funktionseinheit 4. Der Sockel 1 weist einen Sockelkörper 5 auf, der massiv oder als mit einem Füllgut befüllbaren Sockelhohlkörper ausgebildet ist. In den gezeigten Beispielen steht der Sockel 1 mit einer Unterseite auf einem Boden, z.B. einer Wiese, einem Acker, einem Asphaltboden, einem Steinboden oder einer anderen Freifläche. Die Funktionseinheit 4 kann lösbar, z.B. durch Schraubverbindungen oder lösbare Schnappverbindungen, oder unlösbar an dem Tragrahmen 3 gehalten sein, z.B. mittels Schweißverbindungen oder unlösbaren Schnappverbindungen.

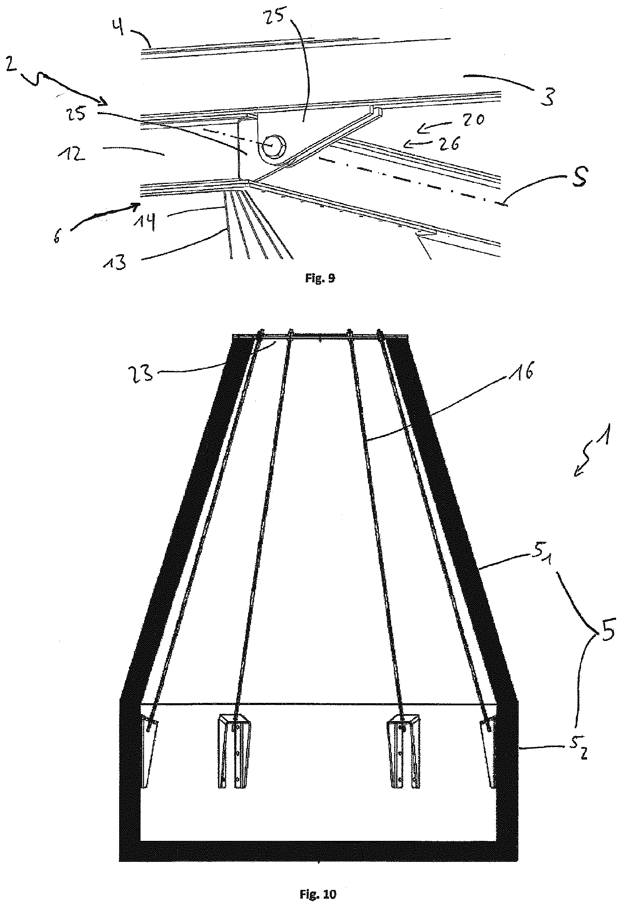

In den Fig. 10, 12 und 14 ist der Sockel 1 bzw. sein hohler Sockelkörper 5 ohne Füllung in drei Ausführungsformen gezeigt. In allen Ausführungsformen weist der Sockelkörper 5 eine rotationssymmetrische Form auf. Die obere Stirnseite des Sockelkörpers 5 ist als Öffnung 23, 23₁ ausgestaltet, durch die hindurch der Sockelhohlkörper mit dem Füllgut befüllt werden kann.

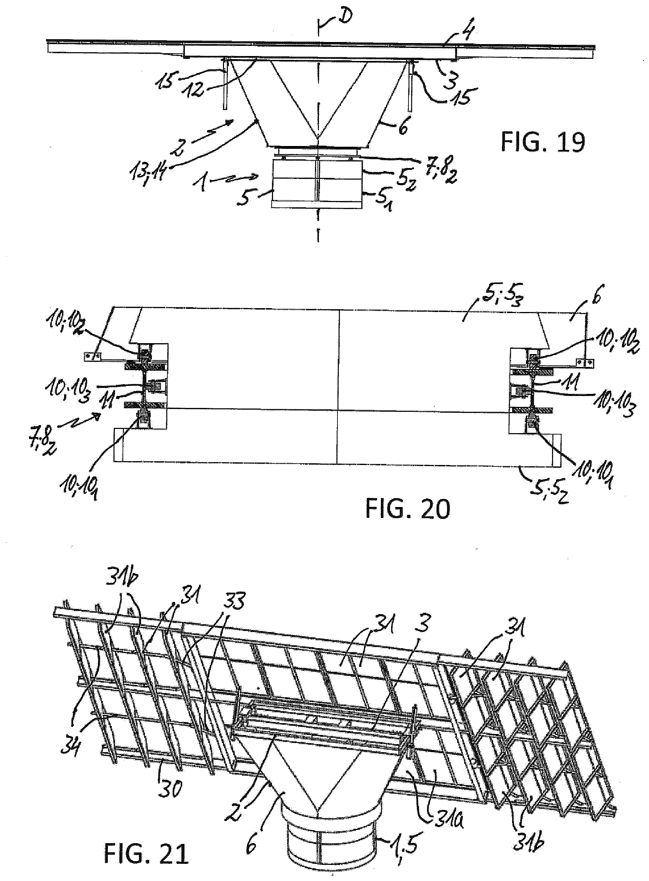

Des Weiteren weist die Tragstruktur 2 des Aufständerungssystems eine Stützstruktur 6 auf, die um eine vertikale Drehachse D drehbeweglich am Sockelkörper 5 gehalten ist. Der Tragrahmen 3 ist um eine horizontale Schwenkachse S schwenkbeweglich an der Stützstruktur 6 angelenkt. Die Fig. 1 und 21 zeigen das Aufständerungssystem mit maximal bzw. vollständig verschwenktem Tragrahmen 3, die Fig. 2, 11, 13 und 19 zeigen das jeweilige Aufständerungssystem mit minimal verschwenktem bzw. vollständig eingeschwenktem Tragrahmen 3.

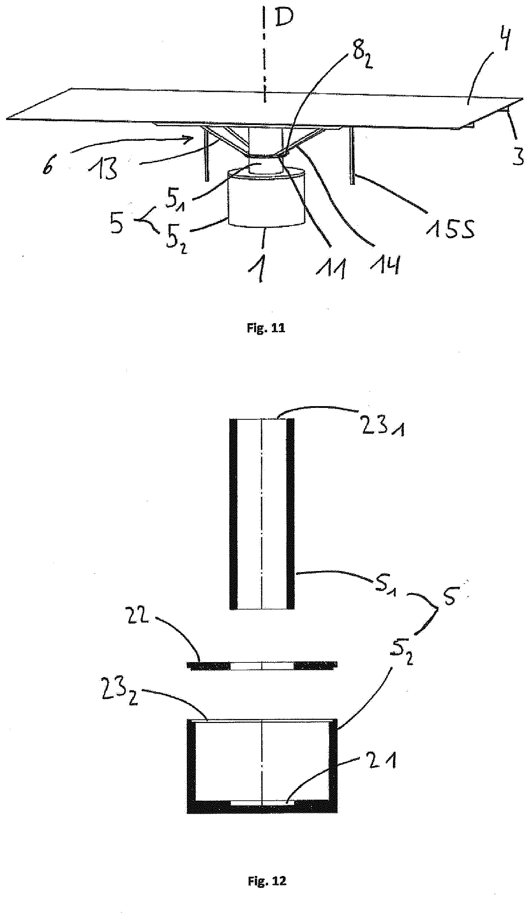

In vorteilhaften Ausführungsformen ist die Stützstruktur 6, in den Fig. 1 bis 10 bzw. in den Fig. 11 und 13 bzw. 19 bis 21 in drei Ausführungsformen gezeigt, gegenüber dem Sockellkörper 5 frei drehbar an diesem gehalten. In alternativen Realisierungen ist die Drehbeweglichkeit der Stützstruktur 6 gegenüber dem Sockelkörper 5 z.B. auf einen bestimmten Drehwinkelbereich begrenzt, der vorzugsweise mindestens 180° beträgt und fallabhängig einen beliebigen Wert zwischen 0° und 360° haben kann.

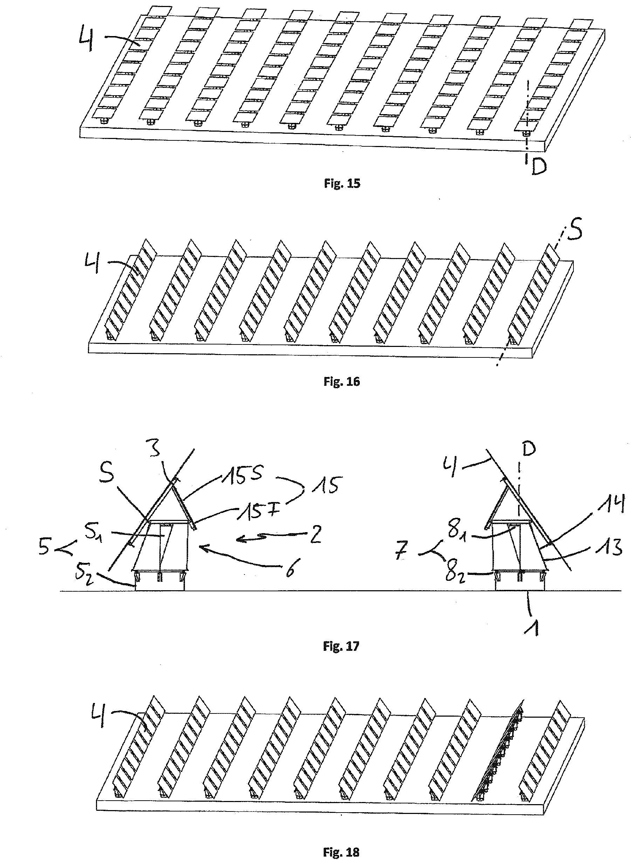

In den Fig. 15 bis 18 ist ein zweidimensionales Feld von erfindungsgemäßen Aufständerungssystemen gezeigt, die in mehreren voneinander beabstandeten Reihen mit daran gehaltenen Photovoltaikmodulen angeordnet sind. Ein solches Feld kann sich z.B. auf einer zusätzlich landwirtschaftlich genutzten Acker- oder Wiesenfläche befinden.

In Fig. 15 sind die Aufständerungssysteme in vollständig eingeschwenktem Zustand gezeigt, in denen Frontseiten der Funktionseinheiten 4 bzw. Photovoltaikmodule vertikal nach oben orientiert sind. In Fig. 16 sind die Aufständerungssysteme in maximal verschwenktem Zustand synchron z.B. nach Süden ausgerichtet gezeigt. Durch die freie Drehbarkeit der Stützstruktur 6 gegenüber dem Sockelkörper 5 kann das Photovoltaikmodul über den Tagesverlauf hinweg von der morgendlichen Ost-Ausrichtung dem Sonnenstand bis zur abendlichen West-Ausrichtung nachgeführt und über Nacht über die Süd-Ausrichtung oder die Nord-Ausrichtung hinweg wieder in die morgendliche Ost-Ausrichtung zurückgebracht werden.

Fig. 17 zeigt zwei benachbarte Aufständerungssysteme mit vollständig verschwenkten Tragrahmen 3, deren Stützstrukturen 6 um 180° gegeneinander derart verdreht sind, dass die daran gehaltenen Funktionseinheiten 4 bzw. Photovoltaikmodule voneinander weg weisen. Dadurch ist zwischen den beiden Aufständerungssystemen eine freie Gasse gebildet, welche bis an die beiden Sockel 1 heranreicht und auch in der Höhe nicht durch die Tragstrukturen 2 und die an ihnen gehaltenen Funktionseinheiten 4 versperrt wird.

Bei Aufstellung der Aufständerungssysteme in mehreren Reihen, wie im Fall der Fig. 15 und 16, können die Aufständerungssysteme benachbarter Reihen, wie vorstehend zu Fig. 17 beschrieben, voneinander weggedreht werden, wie in Fig. 18 für die beiden am weitesten rechts befindlichen Reihen gezeigt. Dadurch ermöglicht die Drehbarkeit der Stützstruktur 6 gegenüber dem Sockelkörper 5 um mindestens 180° bzw. die freie Drehbarkeit die Bildung einer vergleichsweise breiten Gasse zwischen je zwei benachbarten Reihen von Aufständerungssystemen trotz großer, an den Aufständerungssystemen gehaltener Photovoltaikmodule. Durch diese Gassen zwischen den Reihen können dann Fahrzeuge zur Pflege und Wartung der Aufständerungssysteme und Funktionseinheiten 4 oder landwirtschaftliche Nutzfahrzeuge bei Nutzung der Freifläche zu landwirtschaftlichen Zwecken weitestgehend unbehindert von den Aufständerungssystemen fahren. Dies ermöglicht eine landwirtschaftliche Nutzung praktisch der gesamten Bodenfläche des Aufstellungsareals der Aufständerungssysteme mit Ausnahme des von den Sockeln 1 mit ihrer Unterseite eingenommenen Flächenanteils, der relativ gering sein kann, z.B. nur ca. ein bis einige wenige Prozent der Gesamtfläche.

In vorteilhaften Realisierungen ist die Stützstruktur 6, wie in den gezeigten Beispielen, durch eine sich ringförmig um die vertikale Drehachse D erstreckende Drehlagerung 7 am Sockelkörper 5 gehalten.

In vorteilhaften Ausführungsformen ist, wie in den gezeigten Beispielen, der Sockelkörper 5 säulenförmig, und die Drehlagerung 7 umfasst eine erste, obere ringförmige Drehlagereinheit 8₁ und/oder eine zweite, untere ringförmige Drehlagereinheit 8₂. Die obere Drehlagereinheit 8₁ befindet sich an der oberen Stirnseite des Sockelkörpers 5, während sich die untere Drehlagereinheit 8₂ an einer Säulenmantelaußenseite des Sockelkörpers 5 abstützt. Bei den Ausführungsbeispielen der Fig. 1 bis 14 umfasst die Drehlagerung 7 die obere und die untere Drehlagereinheit 8₁, 8₂, die in diesem Fall zusammen die drehbewegliche Kopplung zwischen dem Sockelkörper 5 und der Stützstruktur 6 bilden. Beim Ausführungsbeispiel der Fig. 19 bis 23 ist die obere Drehlagereinheit 8₁ nur optional vorgesehen.

In vorteilhaften Ausführungen sind die erste und die zweite Drehlagereinheit 8₁, 8₂, wie in den Beispielen der Fig. 1 bis 14, koaxial zueinander und voneinander beabstandet angeordnet. Die zweite Drehlagereinheit 8₂ kann in beliebiger geeigneter Höhe an dem Säulenaußenmantel des Sockelkörpers 5 gehalten sein bzw. sich an diesem abstützen.

In vorteilhaften Realisierungen weist das Aufständerungssystem, wie in den gezeigten Beispielen, einen Drehantrieb 9 zum Drehen der Stützstruktur 6 um die vertikale Drehachse D auf. An den Drehantrieb 9 ist im Beispiel der Fig. 1 bis 10 die untere Drehlagereinheit 8₂ angekoppelt, ebenso in nicht gezeigter Weise im Beispiel der Fig. 19 bis 23, im Beispiel der Fig. 11 bis 14 hingegen in nicht näher gezeigter Weise die obere Drehlagereinheit 8₁.

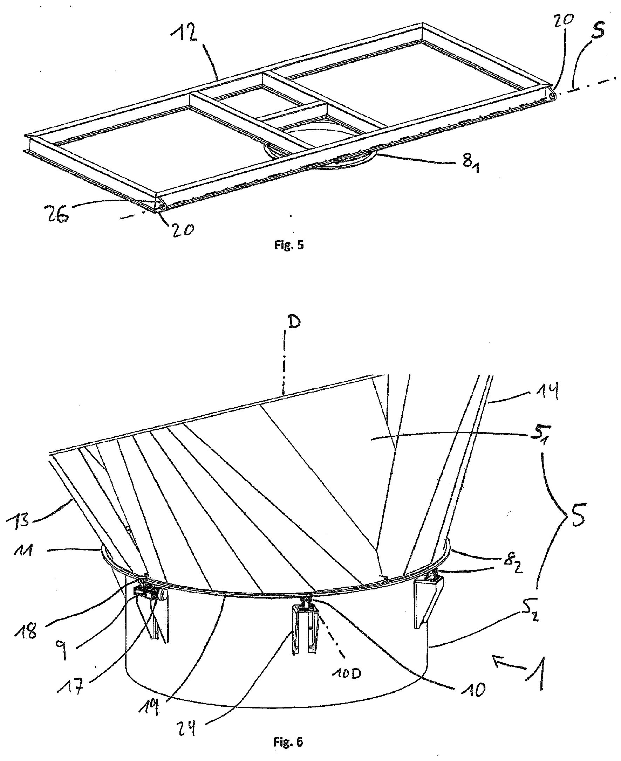

In entsprechenden Realisierungen umfasst der Drehantrieb 9, wie im Beispiel der Fig. 1 bis 10 und insbesondere aus Fig. 6 ersichtlich, einen Drehantriebsmotor 17, der ein Zahnrad 18 antreibt, welches in einen komplementären Zahnkranz 19 der zweite Drehlagereinheit 8₂ eingreift. Der Drehantrieb 9 ist stationär am Sockelkörper 5 festgelegt und dreht den mit der Stützstruktur 6 drehfest verbundenen Zahnkranz 19 und damit die Stützstruktur 6. Der Drehantriebsmotor 9 kann z.B. direkt mit von dem Photovoltaikmodul erzeugter elektrischer Energie gespeist werden, so dass das Aufständerungssystem autark betrieben werden kann.

In vorteilhaften Ausführungen umfasst die untere Drehlagereinheit 8₂, wie in den gezeigten Beispielen, mehrere Drehlagerrollen 10 und einen sich gegen die Drehlagerrollen 10 abstützenden Drehlagerring 11. Dabei können die Drehlagerrollen 10 an der Säulenmantelaußenseite angebracht sein und der Drehlagerring 11 an einem unteren Bereich der Stützstruktur 6 angebracht oder von dem unteren Bereich der Stützstruktur 6 gebildet sein. Alternativ können die Drehlagerrollen 10 am unteren Bereich der Stützstruktur 6 angebracht sein und der Drehlagerring 11 an der Säulenmantelaußenseite angebracht oder von der Säulenmantelaußenseite gebildet sein.

Speziell weisen die Ausführungsformen der Fig. 1 bis 10 und 19 bis 23 mehrere an der Säulenmantelaußenseite fixierte Drehlagerrollen 10 und einen an der Unterseite der Stützstruktur 6 angeordneten Drehlagerring 11 auf. Der Drehlagerring 11 stützt sich axial auf den axial nach oben weisenden Drehlagerrollen 10 ab. In den Fig. 1 bis 3 sind bei der dortigen Ausführungsform drei der mehreren Drehlagerrollen 10 zu sehen, welche in Umfangsrichtung in gleichmäßigen Abständen voneinander an der Säulenmantelaußenseite des Sockelkörpers 5 angeordnet sind. Die Drehlagerrollen 10 können auf an der Säulenmantelaußenseite des Sockelkörpers 5 befestigten Befestigungswinkelprofile bzw. Konsolen 24 gehalten sein, wie in Fig. 6 zu sehen. Mittels Unterlegscheiben können die Drehlagerrollen 10 nach Bedarf in ihrer Höhe justiert und dadurch auf den Drehlagerring 11 abgestimmt werden.

In alternativen Realisierungen, wie z.B. bei der in den Fig. 11 bis 14 gezeigten Ausführungsform, umfasst die untere Drehlagereinheit 8₂ mehrere an einer ringförmigen Unterseite der Stützstruktur 6 fixierte, radial nach innen weisende, nicht näher gezeigte Drehlagerrollen, die sich radial an der Säulenmantelaußenseite abstützen. Die Drehlagerrollen brauchen dabei nicht ständig in Kontakt mit der Säulenmantelaußenseite des Sockelkörpers 5 zu sein und auch keine Tragefunktion zu erfüllen, sondern können in diesem Fall als bloße Sicherungen gegen ein zu starkes Verwinden der Tragstruktur um eine horizontale Achse wegen Windeinwirkung oder Schneelast fungieren.

In spezielleren Realisierungen umfassen die Drehlagerrollen 10 je nach Bedarf und Anwendungsfall axial nach oben abstehende, erste Drehlagerrollen 10₁ an der Säulenmantelaußenseite, wie in den Beispielen der Fig. 1 bis 10 und 19 bis 23, oder im unteren Bereich der Stützstruktur 6 und/oder axial nach unten abstehende, zweite Drehlagerrollen 10₂ an der Säulenmantelaußenseite, wie im Beispiel der Fig. 19 bis 23, oder im unteren Bereich der Stützstruktur 6 und/oder radial nach außen abstehende, dritte Drehlagerrollen 10₃ an der Säulenmantelaußenseite, wie im Beispiel der Fig. 19 bis 23, oder im unteren Bereich der Stützstruktur 6 und/oder radial nach innen abstehende, vierte Drehlagerrollen an der Säulenmantelaußenseite oder, wie im Beispiel der Fig. 11 bis 14, im unteren Bereich der Stützstruktur 6.

In entsprechenden Realisierungen weisen die Drehlagerollen 10, wie für das Beispiel der Fig. 1 bis 10 angegeben, in Bezug auf die Drehachse D der Stützstruktur 6 radiale Drehlagerrollachsen 10D auf. Der Drehlagerring 11 läuft mit seiner Unterseite als Lauffläche horizontal auf den Drehlagerrollen 10. Somit können die Drehlagerrollen 10 Kräfte in vertikaler Richtung aufnehmen. Der Drehlagerring 11 kann zusätzlich als Zahnkranz ausgestaltet sein und die Funktion des Zahnkranzes 19 übernehmen.

Beim Ausführungsbeispiel der Figuren 19 bis 23 sind, wie erwähnt, alle Drehlagerrollen 10 an der Säulenmantelaußenseite des Sockelkörpers 5 angebracht, und der Drehlagerring 11 ist am unteren Bereich der Stützstruktur 6 angebracht. Speziell umfassen die Drehlagerrollen 10 in diesem Beispiel die ersten, die zweiten und die dritten Drehlagerrollen 10₁, 10₂, 10₃, die an der Säulenmantelaußenseite nach oben bzw. nach unten bzw. radial nach außen abstehend angeordnet sind. Passend dazu ist der Drehlagerring 11 als Profilträger mit H-förmigem Querschnitt gebildet, wie insbesondere aus Fig. 20 ersichtlich, und an der Unterseite der Stützstruktur 6 befestigt. Dabei fungiert eine Unterseite dieses Drehlagerrings 11 als Stütz-/Lauffläche für die axial nach oben abstehenden, ersten Drehlagerrollen 10₁, eine Oberseite des Drehlagerrings 11 als Stütz-/Lauffläche für die axial nach unten abstehenden, zweiten Drehlagerrollen 10₂ und eine Innenseite des Verbindungsstegs des Drehlagerrings 11 zwischen Oberseite und Unterseite als Stütz-/Lauffläche für die radial nach außen abstehenden, dritten Drehlagerrollen 10₃.

In vorteilhaften Ausführungen umfasst die Stützstruktur 6, wie in den gezeigten Beispielen, einen Stützrahmen 12 und ein Stützgerüst 13. Der Tragrahmen 3 ist um die horizontale Schwenkachse S schwenkbeweglich an dem Stützrahmen 12 angelenkt. Das Stützgerüst 13 ist an einer Oberseite mit dem Stützrahmen 12 verbunden und stützt sich mit einer Unterseite an der Säulenmantelaußenseite des Sockelkörpers 5 ab.

Wie in den gezeigten Beispielen realisiert, kann die optionale obere Drehlagereinheit 8₁ an einer Unterseite des Stützrahmens 12 und die untere Drehlagereinheit 8₂ an einer Unterseite des Stützgerüsts 13 angeordnet sein. Das Stützgerüst 13 verjüngt sich bei den gezeigten Ausführungen in vertikaler Richtung nach unten und bildet dadurch einen ästhetisch ansprechenden und für die gewünschte Stützfunktion günstigen Übergang zwischen dem breiteren Stützrahmen 12 bzw. der breiteren Funktionseinheit 4 und dem demgegenüber schmaleren Sockelkörper 5. Außerdem werden auf diese Weise auf die Funktionseinheit 4 wirkende Kräfte und Momente durch die Stützstruktur 6 gut auf den Sockelkörper 5 übertragen.

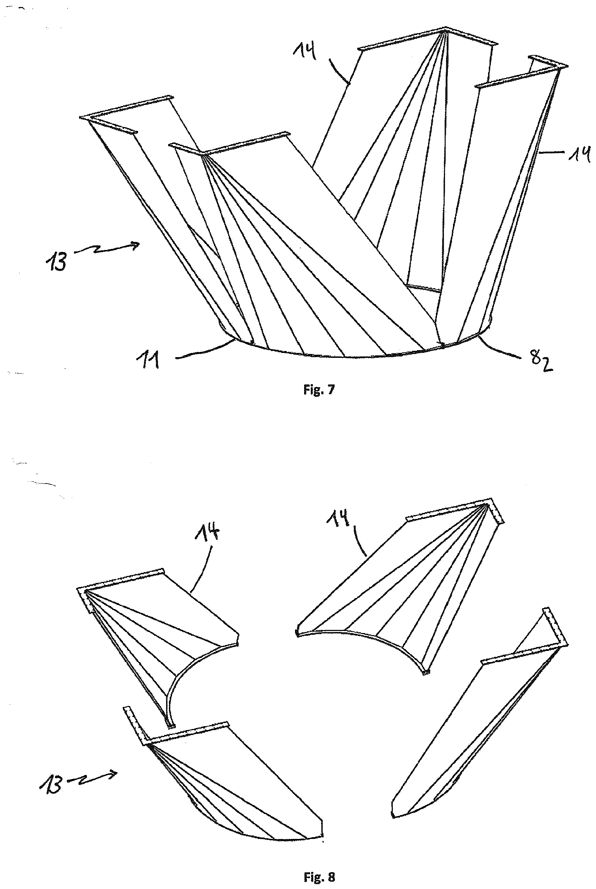

In vorteilhaften Realisierungen weist das Stützgerüst 13, wie in den Ausführungsformen der Fig. 1 bis 10 und 19 bis 23, mehrere, in den gezeigten Beispielen vier, Stützstreben 14 auf, die an der Stützgerüst-Oberseite mit einem Eckprofil, in diesem Fall speziell einem L-Profil, und an der Stützgerüst-Unterseite mit einem Kreisbogenprofil enden. Das Eckprofil an der Stützgerüst-Oberseite ermöglicht ein vorteilhaftes Befestigen der Stützstreben 14 an dem rechteckförmigen Stützrahmen 12. In dem gezeigten Beispiel sind die Stützstreben 14 aus profilierten Blechen gefertigt, die das Kreisbogenprofil an der Stützgerüst-Unterseite kontinuierlich in das Eckprofil an der Stützgerüst-Oberseite überführen. Wie insbesondere in Fig. 8 zu sehen, enden die Stützstreben 14 in einem Viertelkreisbogenprofil, so dass sie im montierten Zustand, wie in Fig. 7 zu sehen, gemeinsam ein vollständiges, durchgängiges Kreisbogenprofil bilden. In den gezeigten Beispielen sind die Stützstreben 14 aneinander und am Drehlagerring 11 befestigt, z.B. mittels Schraub- oder Schweißverbindungen.

In der alternativen Ausführungsform der Fig. 11 bis 14 sind die Stützstreben 14 des Stützgerüsts 13 als Stäbe ausgestaltet, die sich von den Eckpunkten des, im gezeigten Beispiel rechteckförmigen, Stützrahmens 12 zur Säulenmantelaußenfläche des Sockelkörpers 5 hin erstrecken. An der Stützgerüst-Unterseite sind die Stützstreben 14 mit dem Drehlagerring 11 verbunden.

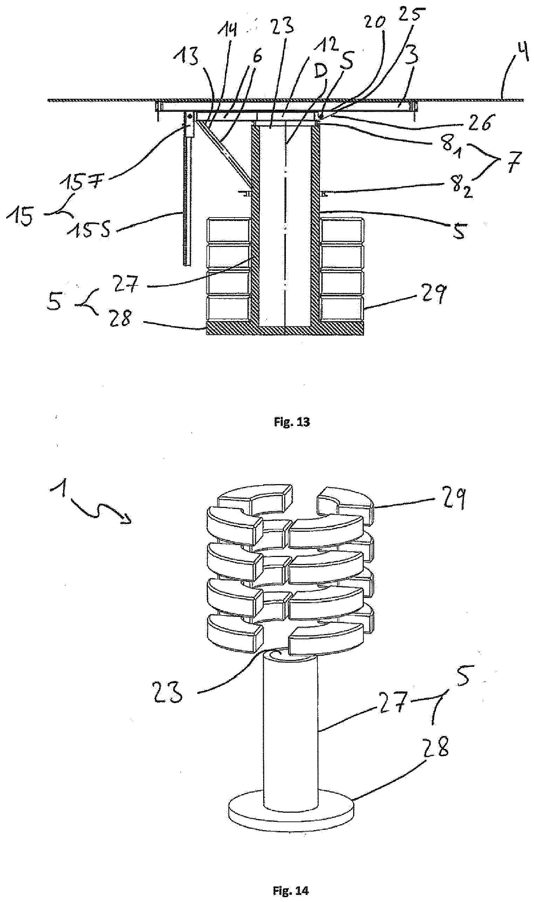

Es versteht sich, dass die Stützstruktur 6 entsprechend den Ausführungsformen der Fig. 1 bis 10 und 19 bis 23 und die Stützstruktur 6 entsprechend der Ausführungsform der Fig. 11 bis 14 frei kombinierbar bzw. austauschbar verwendet werden können, z.B. die Stützstruktur 6 bei einem Aufständerungssystem mit dem Sockelkörper 5 entsprechend der Ausführungsform der Fig. 11 und 12 oder dem Sockelkörper 5 entsprechend der Ausführungsform der Fig. 13 und 14 und die Stützstruktur 6 bei einem Aufständerungssystem mit dem Sockelkörper 5 entsprechend der Ausführungsform der Fig. 1 bis 10.

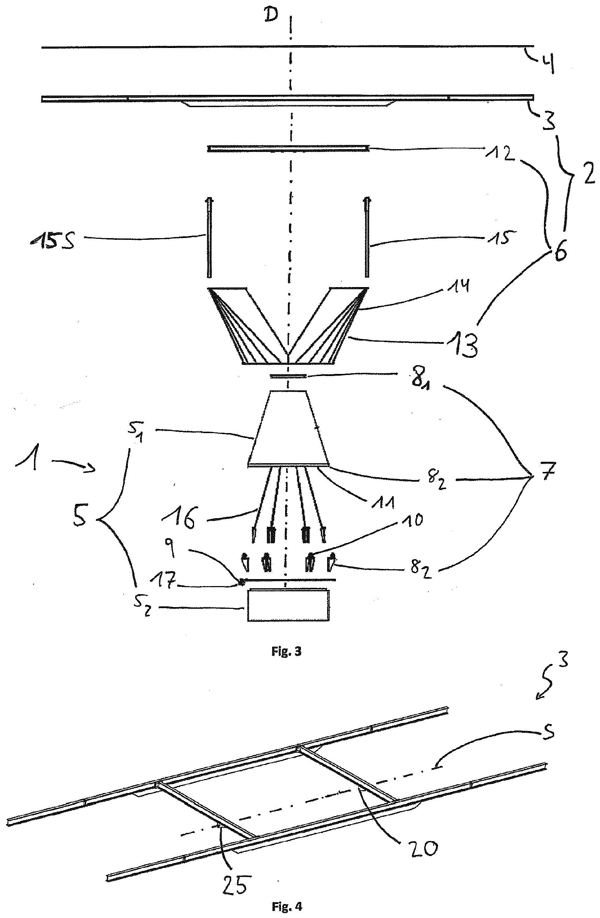

In vorteilhaften Ausführungen weist der Stützrahmen 12, wie in den gezeigten Beispielen, eine ebene Rahmenstruktur auf und der Tragrahmen 3 ist durch eine Schwenklagerung 20 an einer Randseite der Rahmenstruktur des Stützrahmens 12 angelenkt. Beim Beispiel der Fig. 1 bis 10 beinhaltet die Schwenklagerung 20, wie in den Fig. 4, 5 und 9 zu sehen, zwei Gelenke bzw. Scharniere 26, die von ineinandergreifenden Scharnierlappen 25 gebildet sind, welche von dem Tragrahmen 3 und dem Stützrahmen 12 abkragen und z.B. mittels Stifte oder Schrauben verbunden sind. Im gezeigten Beispiel weist der Tragrahmen 3 die Scharnierlappen 25 in einem Mittenbereich der den Tragrahmen 3 bildenden Träger auf, wie insbesondere in Fig. 4 zu sehen. Dadurch ist das zum Schwenken des Tragrahmens 3 und der daran gehaltenen Funktionseinheit 4 erforderliche Drehmoment geringer als bei einer eher randseitigen Anlenkung.

Zusätzlich kann optional an der Randseite des Tragrahmens 3, welche parallel zur und näher an der Schwenkachse S verläuft, ein Ausgleichsgewicht gehalten sein. Bei geeigneter Wahl des Gewichts ist das zum Schwenken des Tragrahmens 3 und der Funktionseinheit 4 aufzubringende Drehmoment sehr klein bzw. vernachlässigbar gering. Außerdem kann der Tragrahmen 3 beispielsweise mit Windabweisern, z.B. Spoilern mit Tragflächenprofil, versehen sein, um das Schwenken bei Wind zu erleichtern bzw. zu unterstützen.

Der maximal mögliche Schwenkbereich des Tragrahmens 3 ist einerseits begrenzt durch die flächige Anlage des Tragrahmens 3 gegen den Stützrahmen 12, wie beispielsweise in den Fig. 2, 9, 11 und 13 gezeigt, und andererseits durch die Anlage des Tragrahmens 3 oder der Funktionseinheit 4 mit der Randseite, die sich beim Verschwenken des Tragrahmens 3 in Richtung des Bodens neigt, gegen die Stützstruktur 6 oder den Sockelkörper 5.

In vorteilhaften Realisierungen weist das Aufständerungssystem mindestens einen, in den gezeigten Beispielen zwei Schwenkantriebe 15 zum Verschwenken des Tragrahmens 3 um die horizontale Schwenkachse S auf. Der Schwenkantrieb 15 ist in den gezeigten Beispielen ein Linearantrieb mit einer Stangenführung 15F als einem ersten Antriebselement und einer gegenüber der Stangenführung 15F linearbewegten Antriebsstange 15S als einem zweiten Antriebselement. Dabei ist das eine Antriebselement an der Stützstruktur 6 und das andere Antriebselement am Tragrahmen 3 gehalten.

Die Antriebsstange 15S kann, wie in den gezeigten Beispielen, als Zahnstange ausgestaltet sein, in deren Zähne ein von der Stangenführung 15F angetriebenes Zahnrad eingreift. Dabei ist die Antriebsstange 15S schwenkbeweglich am Tragrahmen 3 angelenkt und schwenkbeweglich in der Stangenführung 15F geführt. Vorzugsweise ist dabei die Stangenführung 15F auf der Seite des Stützrahmens 12 an diesem gehalten, die den die Schwenklagerung 20 bildenden Scharnieren 26 gegenüber liegt, wie insbesondere in den Fig. 1 und 17 zu sehen.

In vorteilhaften Ausführungen verjüngt sich der Sockelkörper 5 in vertikaler Richtung nach oben hin. Der Sockelkörper 5 kann sich kontinuierlich, insbesondere linear, nach oben hin verjüngen, wie in der in den Fig. 1 bis 10 gezeigten Ausführungsform, oder stufenweise, wie in den in Fig. 12 und in den Fig. 13 und 14 gezeigten zweistufigen Ausführungsformen.

In vorteilhaften Ausführungen ist der Sockelkörper 5 aus einem Beton- oder Steinmaterial gebildet und/oder als Sockelhohlkörper gebildet und mit einem Schüttgutmaterial und/oder einer Füllflüssigkeit und/oder einer Energiespeichereinheit als Füllgut befüllt. Die Energiespeichereinheit kann z.B. zum Versorgen des Drehantriebs 9 und des Schwenkantriebs 15 mit elektrischer Energie dienen.

In vorteilhaften Realisierungen umfasst der Sockelkörper 5, wie in den Beispielen der Fig. 1 bis 10 und 19 bis 23, mehrere, z.B. zwei oder drei, säulenförmige, in vertikaler Richtung aufeinander angeordnete Sockelteile 5₁, 5₂, 5₃. Zudem kann, wie zum Ausführungsbeispiel der Fig. 1 bis 10 gezeigt, ein oberster Sockelteil 5₁ durch zugkraftaufnehmende Verbinder 16 mit einem untersten Sockelteil 5₂ verbunden sein.

In der in den Fig. 1 bis 10 gezeigten Ausführungsform weist der Sockelkörper 5 zwei Sockelteile 5₁, 5₂ auf, von denen das untere Sockelteil 5₂ eine hohlzylindrische Form und das obere Sockelteil 5₁ eine hohle Kegelstumpfform aufweisen. Das obere Sockelteil 5₁ weist an seinem unteren Ende eine Ringschulter auf und das untere Sockelteil 5₂ weist an seinem oberen Ende eine komplementäre Ringschulter auf. Beim aufeinander Anordnen des oberen und des unteren Sockelteils 5₁, 5₂ lassen sich die beiden Sockelteile 5₁, 5₂ mittels der Ringschultern koaxial ausrichten. Zudem verhindern die Ringschultern ein horizontales Verrutschen der Sockelteile 5₁, 5₂ gegeneinander.

Im Ausführungsbeispiel der Fig. 19 bis 23 ist der Sockelkörper 5 massiv ausgeführt und weist drei oder mehr scheibenförmige, aufeinandergelegte Sockelteile 5₁, 5₂, 5₃ auf, einschließlich eines Sockelfußes als untersten Sockelteil.

In entsprechenden Realisierungen sind die Verbinder 16, wie zum Ausführungsbeispiel der Fig. 1 bis 10 gezeigt, am einen Ende an einer Innenseite des unteren Sockelteils 5₂ verankert und am anderen Ende an einer Oberseite des oberen Sockelteils 5₁ gehalten. Die Verbinder 16 verhindern eine axiale Bewegung der Sockelteile 5₁, 5₂ voneinander weg und auch ein gegenseitiges Verkippen. Optional lässt sich die Länge der Verbinder 16 nachträglich, d.h. im an den Sockelteilen 5₁, 5₂ montierten Zustand, verstellen und somit lassen sich die Sockelteile 5₁, 5₂ durch ein Verkürzen der quasi als Zuganker fungierenden Verbinder 16 in Richtung aufeinander zu mit einer Zugkraft beaufschlagen. Die Verbinder 16 können z.B. Seile oder starre Streben aufweisen.

In alternativen Realisierungen, wie beispielsweise bei der Ausführungsform der Fig. 11 und 12, besteht der Sockelkörper 5 aus zwei hohlzylindrisch geformten Sockelteilen 5₁, 5₂, welche auf- und ineinander angeordnet sind, ohne dabei durch Verbinder zusätzlich miteinander verbunden zu sein. Dabei weist der untere Sockelteil 5₁ einen gegenüber dem oberen Sockelteil 5₂ größeren Durchmesser und eine geringere Höhe auf. Der obere Sockelteil 5₁ ist koaxial zum unteren Sockelteil 5₂ und liegt mit einer Unterseite passgenau in einer kreisförmigen Vertiefung 21 in der Unterseite des unteren Sockelteils 5₂. Dadurch wird ein Verrutschen des oberen Sockelteils 5₁ gegenüber dem unteren Sockelteil 5₂ verhindert.

Wie in dem gezeigten Beispiel der Fig. 11 und 12 können die oberen Stirnseiten beider Sockelteile 5₁, 5₂ insgesamt als Öffnungen 23₁, 23₂ ausgestaltet sein, durch die hindurch der Sockelhohlkörper 5 mit dem Füllgut befüllt werden kann. Die beiden Sockelteile 5₁, 5₂ können dabei voneinander getrennte oder miteinander verbundene Hohlräume aufweisen. Vorzugsweise kann die Öffnung 23₂ des unteren Sockelteils 5₂ mit einem ringförmigen Sockeldeckel 22 abgedeckt werden, wobei eine Ausnehmung in der Mitte des Sockeldeckels 22 ein Hindurchführen des oberen Sockelteils 5₁ ermöglicht. Zur Montage wird das obere Sockelteil 5₁ durch die Ausnehmung im Sockeldeckel 22 hindurchgeführt und der Sockeldeckel 22 an der oberen Stirnseite des unteren Sockelteils 5₂ abdeckend angeordnet. Der Sockeldeckel 22 kann zusätzlich ein Verrutschen oder Kippen des oberen Sockelteils 5₁ gegenüber dem unteren Sockelteil 5₂ verhindern.

In weiteren alternativen Realisierungen, wie beispielsweise bei der Ausführungsform der Fig. 13 und 14, besteht der Sockelkörper 5 aus einem hohlzylindrisch geformten Säulenteil 27 und einem z.B. kreisscheibenförmigen Fußteil 28, das an der Unterseite des Säulenteils 27 radial nach außen von diesem absteht und auf dem mindestens ein Ballastelement 29 angeordnet ist.

In entsprechenden Realisierungen, wie zum Ausführungsbeispiel der Fig. 13 und 14 gezeigt, ist das Säulenteil 27 hohlzylindrisch geformt und das Fußteil 28 steht kreisringförmig von einer Unterseite des Säulenteils 27 ab. Zudem sind auf dem Fußteil 28 mehrere viertelkreisförmige Ballastelemente 29 in mehreren Schichten aufeinander gestapelt, wobei jeweils vier Ballastelemente 29 das Säulenteil 27 ringförmig umgeben. Vorzugsweise sind die Ballastelemente 29 miteinander verbunden, so dass sie nicht in ihrer Position verrutschen oder von dem Stapel aus Ballastelementen 29 bzw. dem Fußteil 28 herunterfallen können. Die obere Stirnseite des Säulenteils 27 ist als Öffnung 23 ausgebildet, durch die hindurch der hohle Sockelkörper 5 optional befüllt werden kann, und die Stützstruktur 6 ist an dieser Stirnseite gehalten. Die Ballastelemente 29 können massiv oderalternativ als befüllbare Hohlkörper ausgebildet sein.

Das Säulenteil 27 ragt, wie in Fig. 13 gezeigt, mit einem oberen, an die Stirnseite angrenzenden Abschnitt in vertikaler Richtung nach oben über den Stapel der Ballastelemente 29 hinaus und die Stützstruktur 6 stützt sich an der Säulenmantelaußenseite im Bereich des hinausragenden Abschnitts an dem Sockelkörper 5 ab. Dadurch, dass die ringförmig um das Säulenteil 27 angeordneten Ballastelemente 29 einen gegenüber dem Säulenteil 27 größeren Durchmesser aufweisen und der obere Abschnitt des Säulenteils 27 über die Ballastelemente 29 hinausragt, verjüngt sich in diesem Fall der Sockel 1 in zwei Stufen in vertikaler Richtung nach oben hin.

In alternativen Ausführungsformen hat das Säulenteil 27 eine prismatische, z.B. quadratische, Querschnittsfläche und/oder die Ballastelemente 29 sind als geschlossene Ringteile gebildet, z.B. mit mittiger, prismatischer oder kreisrunder Ausnehmung, so dass jedes Ballastelement 29 einzeln das Säulenteil 27 umfangsseitig vollständig umgibt.

In weiteren alternativen Ausführungen ist der Sockelkörper 5 allein durch die Ballastelemente 29 gebildet, d.h. ohne das Säulenteil 27. Dabei können die Ballastelemente 29 als teilkreisförmige oder als vollkreisförmige Elemente gebildet sein, z.B. auch als hohle oder massive Scheibenkörper. Letzteres entspricht der erwähnten Ausführung des Sockelkörpers 5 im Beispiel der Fig. 19 bis 23.

In vorteilhaften Ausführungen ist das Aufständerungssystem zum Aufständern der Funktionseinheit 4 in einer speziellen Realisierung eingerichtet, bei der die Funktionseinheit 4, wie zum Ausführungsbeispiel der Figuren 19 bis 23 gezeigt, einen Rahmen 30 und eine Mehrzahl von an diesem angeordneten, plattenförmigen Funktionsmodulen 31 umfasst, von denen zumindest einige an dem Rahmen 30 zwischen einer Nutzstellung 31a und einer gegenüber der Nutzstellung gekippten Winddruckentlastungsstellung 31b schwenkbeweglich gehalten sind. Bei dieser Funktionseinheit 4 kann es sich insbesondere um ein Photovoltaikmodul mit einer Mehrzahl von beispielsweise in einer Reihe oder einem zweidimensionalen Feld angeordneten Einzelmodulen handeln.

Das Aufständerungssystem weist hierbei einen Schwenkmechanismus 32 zum gekoppelten Verschwenken derjenigen Funktionsmodule 31 auf, die schwenkbeweglich am Rahmen 30 der Funktionseinheit 4 gehalten sind. Im gezeigten Beispiel weist der Schwenkmechanismus 32 eine Treibstange 33 und eine an diese angekoppelte Koppelstange 34 sowie von der Koppelstange 34 zu den einzelnen Funktionsmodulen 31 führende und an diesen befestigte Anlenkhebel 35 auf. Die Treibstange 33 ist an eine nur schematisch gezeigte Schwenksteuerung 36 angekoppelt, die je nach Bedarf und Anwendungsfall einen motorischen Antrieb und/oder eine Bremseinheit und/oder eine Kupplungseinheit jeweils in einer an sich bekannten, herkömmlichen Ausführung beinhaltet. Mit diesem Schwenkmechanismus 32 können die betreffenden Funktionsmodule 31 um eine jeweilige Schwenkachse 37 verschwenkt werden.

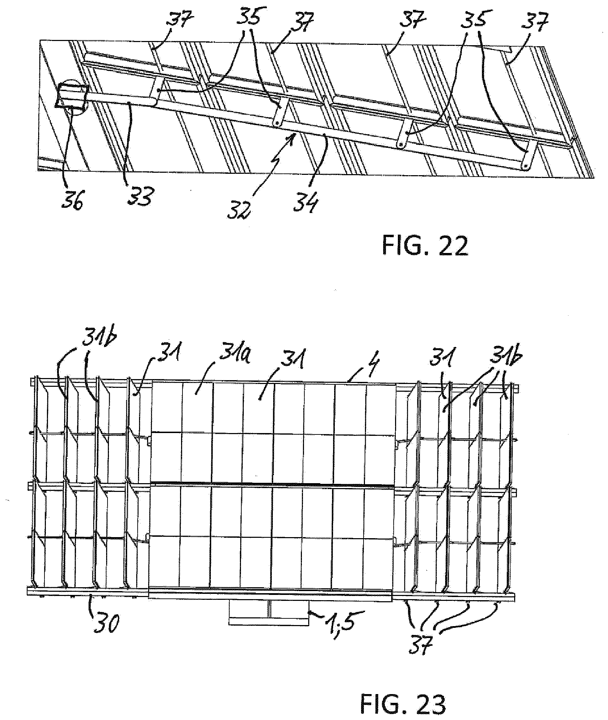

Die Fig. 21 und 23 zeigen die schwenkbeweglichen Funktionsmodule 31, die sich in diesem Beispiel an den beiden Seitenbereichen der rechteckförmigen Funktionseinheit 4 befinden, in der Winddruckentlastungsstellung 31b. Die mittigen Funktionsmodule 31 sind fest in der Nutzstellung 31a installiert, in der sie mit ihrer Nutzfläche parallel zur Ebene des Rahmens 30 liegen und mit der sie beispielsweise zur Sonne hin ausgerichtet werden. Die schwenkbeweglichen seitlichen Funktionsmodule 31 können durch den Schwenkmechanismus 32 von der gezeigten Winddruckentlastungsstellung 31b in diese Nutzstellung 31a zurückgeschwenkt werden. Das Verschwenken der Funktionsmodule 31 kann je nach Realisierung des Systems von Hand oder motorisch mittels eines in diesem Fall in der Schwenksteuerung 36 enthaltenen Antriebsmotors erfolgen.

In der Winddruckentlastungsstellung 31b liegen die verschwenkten Funktionsmodule 31 zur Ebene des Rahmens 30 geneigt, vorzugsweise in einem Winkel von mehr als 45° und vorzugsweise bis 90°. Je größer der maximale Schwenkwinkel ist, um so stärker lassen sich diese Funktionsmodule 31 aus dem Wind herausbringen, d.h. in ihrer Windwiderstandsfläche senkrecht zur Windrichtung reduzieren. Es versteht sich, dass je nach Bedarf alle oder wie gezeigt nur ein Teil der Funktionsmodule 31 auf diese Weise verschwenkbar am Rahmen 30 der Funktionseinheit 4 gehalten sein können.

Optional kann eine Windsensorik bzw. Winddrucksensorik an sich bekannter Art vorgesehen sein, um die Winddruckbelastung der Funktionseinheit 4 und damit des diese tragenden Aufständerungssystems zu erfassen und abhängig davon die Verschwenkung der schwenkbeweglichen Funktionsmodule 31 zu steuern.

Wie die gezeigten und die weiteren, oben erläuterten Ausführungsbeispiele deutlich machen, stellt die Erfindung ein Aufständerungssystem für eine Funktionseinheit zur Verfügung, das sich mit besonders geringem Aufwand aufbauen und bei Bedarf auch wieder rückbauen lässt und dabei eine hohe Stabilität aufweist, wobei es gleichzeitig in ästhetisch ansprechender Weise gestaltet ist. Zudem ermöglicht das Aufständerungssystem bei Verwendung auf landwirtschaftlichen Nutzflächen, dass diese Nutzflächen trotz des oder der aufgestellten Aufständerungssysteme weitestgehend vollständig und uneingeschränkt weiter landwirtschaftlich genutzt werden können.

## Patentansprüche

1. Aufständerungssystem für eine Funktionseinheit, insbesondere ein Photovoltaikmodul, mit
- einem bodenstehenden Sockel (1) mit einem Sockelkörper (5) und
- einer am Sockel gehaltenen Tragstruktur (2) mit einem Tragrahmen (3) für die Funktionseinheit (4), wobei
- die Tragstruktur (2) eine Stützstruktur (6) aufweist, an welcher der Tragrahmen (3) um eine horizontale Schwenkachse (S) schwenkbeweglich angelenkt ist, und
- die Stützstruktur (6) um eine vertikale Drehachse (D) drehbeweglich am Sockelkörper (5) gehalten ist.

2. Aufständerungssystem nach Anspruch 1, wobei die Stützstruktur (6) gegenüber dem Sockelkörper (5) frei drehbar oder über einen Drehwinkelbereich von mindestens 180° begrenzt drehbar am Sockelkörper (5) gehalten ist.

3. Aufständerungssystem nach Anspruch 1 oder 2, wobei die Stützstruktur (6) durch eine sich ringförmig um die vertikale Drehachse (D) erstreckende Drehlagerung (7) am Sockelkörper (5) gehalten ist.

4. Aufständerungssystem nach Anspruch 3, wobei der Sockelkörper (5) säulenförmig ist und die Drehlagerung (7) eine obere, ringförmige Drehlagereinheit (8₁) an einer oberen Stirnseite des Sockelkörpers (5) und/oder eine untere, ringförmige Drehlagereinheit (8₂) an einer Säulenmantelaußenseite des Sockelkörpers (5) umfasst.

5. Aufständerungssystem nach Anspruch 4, wobei die obere und die untere Drehlagereinheit (8₁, 8₂) koaxial zueinander und voneinander axial beabstandet angeordnet sind.

6. Aufständerungssystem nach Anspruch 4 oder 5, mit einem Drehantrieb (9) zum Drehen der Stützstruktur (6) um die vertikale Drehachse (D), an den die obere und/oder die untere Drehlagereinheit (8₁, 8₂) angekoppelt ist.

7. Aufständerungssystem nach einem der Ansprüche 4 bis 6, wobei die untere Drehlagereinheit (8₂) mehrere Drehlagerrollen (10) und einen sich gegen die Drehlagerrollen (10) abstützenden Drehlagerring (11) umfasst, wobei die Drehlagerrollen (10) an der Säulenmantelaußenseite angebracht sind und der Drehlagerring (11) an einem unteren Bereich der Stützstruktur (6) angebracht oder von dem unteren Bereich der Stützstruktur (6) gebildet ist oder wobei die Drehlagerrollen (10) am unteren Bereich der Stützstruktur (6) angebracht sind und der Drehlagerring (11) an der Säulenmantelaußenseite angebracht oder von der Säulenmantelaußenseite gebildet ist.

8. Aufständerungssystem nach Anspruch 7, wobei die Drehlagerrollen (10) axial nach oben abstehende, erste Drehlagerrollen (10₁) an der Säulenmantelaußenseite oder im unteren Bereich der Stützstruktur (6) und/oder axial nach unten abstehende, zweite Drehlagerrollen (10₂) an der Säulenmantelaußenseite oder im unteren Bereich der Stützstruktur (6) und/oder radial nach außen abstehende, dritte Drehlagerrollen (10₃) an der Säulenmantelaußenseite oder im unteren Bereich der Stützstruktur (6) und/oder radial nach innen abstehende, vierte Drehlagerrollen an der Säulenmantelaußenseite oder im unteren Bereich der Stützstruktur (6) umfassen.

9. Aufständerungssystem nach einem der vorhergehenden Ansprüche, wobei die Stützstruktur (6) einen Stützrahmen (12), an dem der Tragrahmen (3) um die horizontale Schwenkachse (S) schwenkbeweglich angelenkt ist, und ein Stützgerüst (13) umfasst, das an einer Oberseite mit dem Stützrahmen (12) verbunden ist und sich mit einer Unterseite an der Säulenmantelaußenseite des Sockelkörpers (5) abstützt.

10. Aufständerungssystem nach Anspruch 9, wobei das Stützgerüst (13) mehrere Stützstreben (14) aufweist, die an der Stützgerüst-Oberseite mit einem Eckprofil und an der Stützgerüst-Unterseite mit einem Kreisbogenprofil enden.

11. Aufständerungssystem nach Anspruch 9 oder 10, wobei der Stützrahmen (12) eine ebene Rahmenstruktur aufweist und der Tragrahmen (3) durch eine Schwenklagerung (20) an einer Randseite der Rahmenstruktur des Stützrahmens (12) angelenkt ist.

12. Aufständerungssystem nach einem der vorhergehenden Ansprüche, mit einem Schwenkantrieb (15) zum Verschwenken des Tragrahmens (3) um die horizontale Schwenkachse (S), wobei der Schwenkantrieb (15) ein Linearantrieb mit einer Stangenführung (15F) als einem ersten Antriebselement und einer gegenüber der Stangenführung linearbewegten Antriebsstange (15S) als einem zweiten Antriebselement ist, wobei das eine Antriebselement an der Stützstruktur (6, 6') und das andere Antriebselement am Tragrahmen (3) gehalten ist.

13. Aufständerungssystem nach einem der vorhergehenden Ansprüche, wobei
- der Sockelkörper (5) sich in vertikaler Richtung nach oben hin verjüngt und/oder
- der Sockelkörper (5) aus einem Beton- oder Steinmaterial gebildet ist und/oder
- der Sockelkörper (5) als säulenförmiger Sockelhohlkörper gebildet und mit einem Füllgut befüllbar ist und/oder
- der Sockelkörper (5) als säulenförmiger Sockelhohlkörper gebildet und mit einem Schüttgutmaterial und/oder einer Füllflüssigkeit und/oder einer Energiespeichereinheit als Füllgut befüllt ist.

14. Aufständerungssystem nach einem der vorhergehenden Ansprüche, wobei
- der Sockelkörper (5) mehrere säulenförmige, in vertikaler Richtung aufeinander angeordnete Sockelteile (5₁, 5₂) umfasst und ein oberster Sockelteil (5₁) durch zugkraftaufnehmende Verbinder (16) mit einem untersten Sockelteil (5₂) verbunden ist oder
- der Sockelkörper (5) mehrere säulenförmige, konzentrisch angeordnete Sockelteile (5₁, 5₂) umfasst und ein inneres Sockelteil (5₁) in vertikaler Richtung nach oben über ein äußeres Sockelteil (5₂) vorsteht oder
- der Sockelkörper (5) ein Säulenteil (27) und ein Fußteil (28) aufweist, das an der Unterseite des Säulenteils (27) radial nach außen von diesem absteht und auf dem mindestens ein Ballastelement (29) angeordnet ist.

15. Aufständerungssystem nach einem der vorhergehenden Ansprüche, wobei das Aufständerungssystem zum Aufständern der Funktionseinheit eingerichtet ist, wobei die Funktionseinheit einen Rahmen und eine Mehrzahl von an diesem angeordneten, plattenförmigen Funktionsmodulen umfasst, von denen zumindest einige an dem Rahmen zwischen einer Nutzstellung und einer gegenüber der Nutzstellung gekippten Winddruckentlastungsstellung schwenkbeweglich gehalten sind, und wobei das Aufständerungssystem einen Schwenkmechanismus (32) zum gekoppelten Verschwenken der schwenkbeweglich am Rahmen der Funktionseinheit gehaltenen Funktionsmodule aufweist.
